(19) Europäisches Patentamt
European Patent Office
Office européen des brevets

(11) **EP 4 183 905 A1**

(12) **EUROPEAN PATENT APPLICATION**
published in accordance with Art. 153(4) EPC

(43) Date of publication:
**24.05.2023 Bulletin 2023/21**

(21) Application number: **21843285.4**

(22) Date of filing: **15.07.2021**

(51) International Patent Classification (IPC):
**C25D 1/04** (2006.01)    **H01M 4/66** (2006.01)

(52) Cooperative Patent Classification (CPC):
**C25D 1/04; H01M 4/66;** Y02E 60/10

(86) International application number:
**PCT/JP2021/026579**

(87) International publication number:
**WO 2022/014668 (20.01.2022 Gazette 2022/03)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **16.07.2020   JP 2020121831**

(71) Applicant: **Toyo Kohan Co., Ltd.
Tokyo 141-8260 (JP)**

(72) Inventors:
• **HORIE, Shinichiro
  Kudamatsu-shi Yamaguchi 744-8611 (JP)**

• **KAWAMURA, Michio
  Kudamatsu-shi Yamaguchi 744-8611 (JP)**
• **TSUTSUMI, Etsuro
  Kudamatsu-shi Yamaguchi 744-8611 (JP)**
• **YOSHIZAKI, Yuma
  Kudamatsu-shi Yamaguchi 744-8611 (JP)**
• **YOSHIOKA, Koh
  Kudamatsu-shi Yamaguchi 744-8611 (JP)**

(74) Representative: **Hoffmann Eitle
Patent- und Rechtsanwälte PartmbB
Arabellastraße 30
81925 München (DE)**

(54) **ELECTROLYTIC IRON FOIL**

(57)    [Object]
An object of the present invention is to provide an electrolytic foil and a battery current collector capable of restraining the risk of breakage and tearing during manufacturing due to reduction in film thickness and further exhibiting sufficient strength and elongation during repetitive charging and discharging of a secondary battery.
[Solving Means]
An electrolytic iron foil in which the electrolytic iron foil is less than 20 um in thickness, the electrolytic iron foil has a first surface and a second surface, and a value obtained by dividing a three-dimensional surface texture parameter Sv by the thickness is equal to or less than 0.27 in both the first surface and the second surface.

[Fig.1]

(a)

[Fig.1]

(b)

**Description**

[Technical Field]

The present invention relates to an electrolytic foil to be used particularly preferably for a current collector of a secondary battery or the like, and particularly relates to an electrolytic iron foil.

[Background Art]

For enhancing the capacity of a battery such as a lithium ion secondary battery and a nickel hydrogen battery that have conventionally been used, a reduction in the thickness of a current collector is effective. As electrolytic foils for secondary batteries, an electrolytic copper foil and the like are widely known.

For example, in PTL 1, in an electrolytic copper foil for a lithium ion secondary battery negative electrode, an electrolytic copper foil intended for restraining occurrence of foil breakage and wrinkling and the like is disclosed.

[Citation List]

[Patent Literature]

[PTL 1]
Japanese Patent Laid-open No. 2017-014608

[Summary]

[Technical Problems]

However, when a copper foil is used for a battery current collector, the possibility of lowering in strength depending on the heating temperature during manufacturing has been regarded as a problem. In consideration of the above problem, the present inventors examined metallic materials capable of restraining a lowering in strength even under heating during manufacturing of an electrode, and focused on iron (Fe) which is lowered little in strength in the heating temperature region during manufacturing of a current collector and which is known as a material inherently excellent in strength and elongation. In addition, iron has advantages in terms of abundant resources and cost.

In the case where iron or a metallic material with high iron content is used as a current collector material, the material properties to be taken into consideration are as follows.

Specifically, in the case where metal with high iron content is used as a current collector material, use for aqueous batteries leads to the possibility of reaction with the electrolytic liquid. However, use for nonaqueous batteries permits application of a current collector material with high iron content.

In addition, in the case of manufacturing an iron foil having such a thickness as to be applicable to a current collector, there are considered a method of manufacturing the iron foil by rolling and a method of manufacturing the iron foil by electroplating.

In the case of manufacturing an iron foil having a thickness of less than 20 um by rolling, continuous production is difficult, and foreign matter or impurities are liable to be engulfed at the time of rolling, posing many problems on a quality basis. Moreover, due to work hardening, there is a possibility that elongation of the obtained iron foil cannot be secured. On the other hand, manufacturing the iron foil by electroplating is considered to enable manufacture of an iron foil which has strength and elongation and which has such a thickness as to be applicable to a current collector.

In consideration of the abovementioned properties, the present inventors repeated extensive and intensive examinations, to arrive at the present invention. Accordingly, it is an object of the present invention to provide an electrolytic iron foil which is capable of restraining breakage or tearing during handling and the like and which has strength and elongation.

[Solution to Problems]

Specifically, an electrolytic iron foil of the present invention is an electrolytic iron foil in which (1) the electrolytic iron foil is less than 20 um in thickness, the electrolytic iron foil has a first surface and a second surface, and a value obtained by dividing a three-dimensional surface texture parameter Sv by the thickness is equal to or less than 0.27 on both the first surface and the second surface.

Preferably, in the electrolytic iron foil of (1), (2) the value obtained by dividing the three-dimensional surface texture parameter Sv by the thickness is equal to or less than 0.24 in at least either one of the first surface and the second surface.

In addition, preferably, in the electrolytic iron foil of (1) or (2) above, (3) a three-dimensional surface texture parameter Sdq (root mean square gradient) is equal to or more than 0.06 in at least either one of the first surface and the second surface.

Preferably, in the electrolytic iron foil of any one of (1) to (3) above, (4) iron content of the foil is equal to or more than 80 wt%.

Preferably, in the electrolytic iron foil of any one of (1) to (4), (5) elongation is equal to or more than 1.2%.

Preferably, in the electrolytic iron foil of any one of (1) to (5) above, (6) a three-dimensional surface texture parameter Sdr is equal to or more than 0.2% in at least either one of the first surface and the second surface.

In addition, preferably, (7) an electrolytic iron foil for battery current collector in the present invention includes the electrolytic iron foil according to any one of (1) to (6).

Further, preferably, (8) an electrolytic iron foil for a nonaqueous battery current collector in the present invention includes the electrolytic iron foil according to any one of (1) to (7) above.

[Advantageous Effects of Invention]

According to the present invention, it is possible to provide an electrolytic iron foil capable of restraining breakage or tearing during handling thereof. In addition, it is possible to provide an electrolytic iron foil having strength and elongation sufficient to endure repetitive charging and discharging even when used as a secondary battery current collector.

[Brief Description of Drawing]

[FIG. 1]

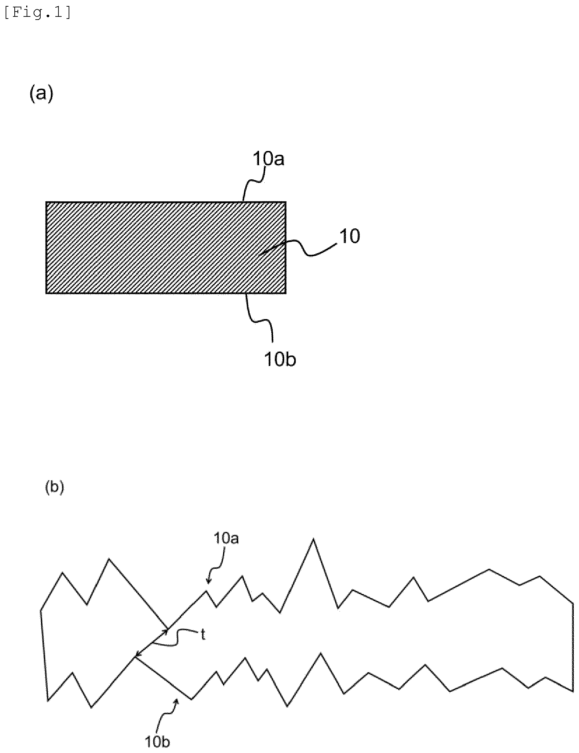

FIG. 1 illustrates schematic diagrams depicting a sectional view of an electrolytic iron foil 10 in the present embodiment.
[FIG. 2]

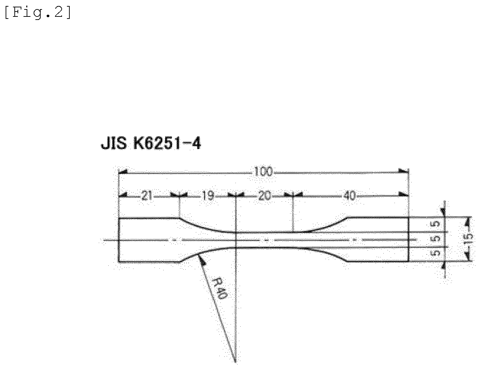

FIG. 2 is a schematic diagram of a specimen used for measuring tensile strength, maximum load, and elongation of the electrolytic iron foil 10 in the present embodiment.

[Description of Embodiment]

«Electrolytic Iron Foil 10»

An embodiment for implementing an electrolytic foil of the present invention will be described below.

FIG. 1 illustrates diagrams schematically depicting an electrolytic iron foil according to one embodiment of the present invention. Note that the electrolytic iron foil of the present invention is not only applied to a battery negative electrode current collector but is also preferably applicable to a battery positive electrode current collector.

The kind of the battery may be a secondary battery or a primary battery. Particularly, the electrolytic iron foil of the present invention can suitably be applied to nonaqueous secondary batteries, for example, a lithium secondary battery, a sodium secondary battery, a magnesium secondary battery, a solid-state battery, and the like.

As depicted in FIG. 1, the electrolytic iron foil 10 of the present embodiment has a first surface 10a and a second surface 10b. The electrolytic iron foil 10 of the present embodiment may be pure iron, or insofar as the problems to be solved of the invention can be solved, the electrolytic iron foil 10 may contain one or more kinds of metal other than iron as sub-components, or may contain unavoidable impurities. Here, pure iron means iron in which the content of metallic elements other than iron is equal to or less than 0.1 wt%. With the content of metallic elements other than iron set to 0.1% or below by weight, occurrence of rusting is slight, as compared to generally circulated rolled iron foils (also called rolled steel foils). Hence, the electrolytic iron foil 10 has the advantage of being excellent in corrosion resistance and anti-rusting property at the time of transportation and storage.

In addition, the iron foil in the present invention is defined as an iron foil in which the iron content of the foil is equal to or more than 80 wt%. With the iron content set to be equal to or more than 80 wt% and with metal other than iron being contained as sub-components, the iron foil is preferable from the viewpoint of both improved strength and cost, while having characteristic properties of iron (strength and elongation).

In the case where the electrolytic iron foil 10 in the present embodiment contains metal other than iron, the metal other than iron includes, for example, nickel, cobalt, molybdenum, phosphor, and boron. From the viewpoint of seeking further enhancement of strength while having characteristic properties of iron (strength and elongation, it is preferable to contain nickel as the metal other than iron. Note that in that case, the nickel content of the foil is preferably equal to or more than 3 wt% but less than 20 wt%, more preferably equal to or more than 3 wt% but less than 18 wt%, and further preferably equal to or more than 5 wt% but less than 16 wt%.

Note that, in the present embodiment, when all the metal contained in the electrolytic iron foil 10 accounts for 100 wt%, the content rate of metal other than iron and nickel is preferably equal to or less than 0.1 wt%.

In the present embodiment, as the method for obtaining the contents of iron and metal other than iron that are contained in the electrolytic iron foil, there can be mentioned, for example, inductively coupled plasma (ICP) emission spectrochemical analysis or the like. In addition, from the content of each metal obtained, content rate of metal can be calculated.

The electrolytic iron foil 10 in the present embodiment is formed by electroplating. Specifically, the electrolytic iron foil 10 can be formed by use of an electroplating bath containing iron ions.

Note that while the electrolytic iron foil 10 of the present embodiment has a first surface and a second surface, for convenience of explanation, at the time of manufacturing the electrolytic iron foil 10, the surface (substrate surface) that has been in contact with a support (substrate) for supporting the electrolytic foil is made to be the first surface 10a, and the other surface (electrolytic surface) is made to be the second surface 10b. Note that, in the following, the first surface (10a) will also simply be called the substrate surface, and the second surface 10b will also simply be called the electrolytic surface.

The electrolytic iron foil 10 of the present embodiment may be a plating layer obtained by a gloss agent not being added to the electroplating bath (for the sake of convenience, also called a "mat iron plating layer") or may be a "bright iron plating layer" obtained by a gloss agent (inclusive of a glass agent for semibright) being added.

Note that the abovementioned "bright" and "mat" depend on evaluation on visual inspection basis, and classification based on precise numerical values is difficult. Further, the degree of brightness varies depending on other parameters such as a bath temperature described later. Accordingly, "bright" and "mat" used in the present embodiment are mere definitions used in the case where attention is paid to the presence or absence of a gloss agent.

The electrolytic iron foil 10 of the present invention has the first surface 10a (substrate surface) and the second surface 10b (electrolytic surface), with a value obtained by dividing a three-dimensional surface texture parameter Sv by the thickness of the electrolytic iron foil 10 being equal to or less than 0.27 in both the first surface 10a (substrate surface) and the second surface 10b (electrolytic surface). In addition, a value obtained by dividing a three-dimensional surface texture parameter Sv by the thickness of the electrolytic iron foil 10 is preferably equal to or less than 0.24 in at least either one of the first surface 10a and the second surface 10b. The reason is as follows.

Specifically, the electrolytic iron foil 10 of the present embodiment is obtained by manufacturing a metallic foil of high strength with use of electroplating in order to meet the demand for thinning of the electrolytic foil used as the current collector attendant on an increase in the capacity of a secondary battery.

The present inventors repeated extensive and intensive examinations for manufacturing an electrolytic foil capable of restraining the risk of breakage or tearing due to reduction of film thickness during manufacturing and handling (inclusive of assembly of a battery) and further capable of restraining wrinkling or breakage even in the case where an active material large in volume variation at the time of repetitive charging and discharging of a secondary battery is used.

As a result of the examinations, the present inventors have found out that the abovementioned effects can be obtained in the case of using an electrolytic iron foil as an electrolytic foil of high strength, by controlling the surface shape, and have arrived at the present invention.

As the parameter representing the surface shape of the electrolytic iron foil of the present embodiment, specifically, the "maximum pit depth" (three-dimensional surface texture parameter Sv) of the surface roughness defined in ISO 25178-2:2012 is applied.

In other words, tensile strength of a metallic foil is theoretically a value not influenced by thickness. However, in practice, it has been found out by the present inventors' study that, in the case where the thickness of an electrolytic iron foil is reduced (specifically, less than 20 pm), there is a case where the tensile strength is extremely lowered than an assumed value. For example, even in the case where a plurality of electrolytic iron foils of 6 um were manufactured under similar bath conditions, there were cases where the strength was clearly lowered due to manufacturing conditions or the like. That is, it was confirmed that, even in the case of manufacturing electrolytic iron foils similar in thickness, there were cases where tensile strength and maximum load were conspicuously lowered. The present inventors have considered that the tensile strength and maximum load being liable to be influenced by ruggedness or the like of the surface of the metallic foil, as one of the reasons.

Particularly, it was found out that there is a possibility that intrinsic strength (tensile strength, maximum load, or the like) of the electrolytic iron foil could not be obtained due to generation of conspicuously deep recessed portions or valley portions. In regard of this, it is assumed that in the case where there is a part at which the distance t between the first surface 10a and the second surface 10b is particularly short as depicted in FIG. 1(b) in the thickness direction of the electrolytic iron foil, a crack generated due to concentration of stress at the part would become a crack propagating to the whole part of the electrolytic iron foil with the part as a starting point. It is considered that, as a result, breakage or tearing is liable to occur, so that only a strength lower than the intrinsic strength can be obtained.

Note that, in the electrolytic iron foil, though depending on the plating conditions, in the case where polishing or the like is not conducted after plating for forming a foil, the ruggedness of plating particles precipitated by iron plating is liable to appear on the electrolytic surface; in other words, though the ruggedness is small in pitch, the ruggedness is liable to be somewhat large as compared to a plating including very fine crystal grains (a plating strong in leveling action). In addition, on the substrate surface side, the ruggedness of the substrate is not so reflected as compared to the case of very fine crystal grains, but large ruggedness present on the support surface is liable to be reflected. In other words, in the iron foil in which ruggedness of plating particles is liable to appear, it is necessary to perform such control as to ensure that the ruggedness on the electrolytic surface side also does not become excessively large, and, since the ruggedness on the electrolytic side is liable to appear, control of ruggedness on the substrate surface side is also important.

As a result of repeated examinations based on the abovementioned assumption, in the surface of the electrolytic iron foil of the present embodiment, setting Sv (maximum pit depth) to a predetermined value in relation to the thickness of the electrolytic iron foil has made it possible to obtain an electrolytic iron foil that has conventionally not been attainable.

The electrolytic iron foil 10 of the present embodiment based on the abovementioned gist is characterized by having values of "Sv (maximum pit depth) [pm]/the thickness [um] of the electrolytic iron foil 10" in both surfaces (the first surface 10a and the second surface 10b) being equal to or less than 0.27. Note that the thickness of the electrolytic iron foil 10 will be referred to as the "thickness."

In the case where the value of Sv (maximum pit depth)/the thickness of the electrolytic iron foil 10 exceeds 0.27 in any one surface, there is a possibility that a value needed in the intrinsic strength (tensile strength or maximum load) of the electrolytic iron foil cannot be obtained, which is unfavorable. In other words, the electrolytic iron foil is characterized by having the value of Sv/thickness not exceeding 0.27 in any surface. From the viewpoint of further stabilizing strength (intrinsic strength is easily maintainable), the value of Sv/thickness is preferably equal to or less than 0.24 and more preferably equal to or less than 0.22 in at least either surface of the first surface 10a and the second surface 10b. Further, from the viewpoint of further stabilizing strength, the value of Sv/thickness in both surfaces (both the first surface 10a and the second surface 10b) of the electrolytic iron foil 10 is more preferably equal to or less than 0.24, and particularly preferably equal to or less than 0.22. Furthermore, the lower limit for Sv (maximum pit depth)/the thickness of the electrolytic iron foil 10 is not particularly limited to any value, but is preferably equal to or more than 0.01.

Note that the three-dimensional surface texture parameter Sv in the electrolytic iron foil 10 of the present embodiment can be obtained by a known non-contact type three-dimensional surface roughness measuring device or the like.

Note that, from the viewpoint of further suppressing breakage or tearing during manufacturing or during handling (inclusive of assembly of a battery), each value of Sv [$\mu$m] (maximum pit depth), Sz [$\mu$m] (maximum height), and Sa [$\mu$m] (arithmetical mean height) in the first surface 10a and the second surface 10b of the electrolytic iron foil 10 of the present embodiment preferably have the following values. Note that the three-dimensional surface texture parameters in the present embodiment are values measured according to ISO-25178-2:2012 (corresponding JIS B 0681-2:2018).

Sv ··· less than 5.0 um, more preferably less than 4.0 um
Sz ··· less than 10.0 um, more preferably less than 8.0 um
Sa ··· less than 1.0 um, more preferably less than 0.6 um

Here, the lower limits for Sv, Sz, and Sa are not particularly limited to any values, but, normally, a value equal to or more than 0.2 um is applied to Sv, a value equal to or more than 0.8 um is applied to Sz, and a value equal to or more than 0.03 um is applied to Sa.

In addition, from the viewpoint of active material adhesion, each value of Sdq (root mean square gradient), Sdr (developed interfacial area ratio), and Sal (autocorrelation length) in at least either one surface of the first surface 10a and the second surface 10b of the electrolytic iron foil 10 of the present embodiment preferably has the following values. Note that the three-dimensional surface texture parameters in the present embodiment are values measured according to ISO-25178-2:2012 (corresponding JIS B 0681-2:2018).

Sdq ··· equal to or more than 0.06, more preferably equal to or more than 0.10, further preferably equal to or more than 0.20
Sdr ··· equal to or more than 0.20%, more preferably equal to or more than 0.50%, further preferably equal to or more than 1.00%
Sal ··· less than 50 um, more preferably equal to or less than 30 um, further preferably equal to or less than 20 um

In the case of being used as a current collector, from the viewpoint of active material adhesion, it is preferable that ruggedness of a fine pitch formed by plating crystal grains be present, and, particularly, setting the values of Sdq and Sdr in the abovementioned ranges allows the ruggedness of the plating crystal grains to be made to have a suitable shape. Particularly, setting Sdr in at least either one surface to be equal to or more than 1.00% leads to expectation for more enhancement of active material adhesion.

An upper limit for Sdq is not particularly present, and is less than 1. An upper limit for Sdr is not particularly limited to any value, but in the case where Sdr is extremely too large, the ruggedness may be too high, so that it is normally less than 50%.

As for a lower limit for Sdq, from the viewpoint of enhancing the active material adhesion on both surfaces, Sdq in both the first surface and the second surface is preferably equal to or more than 0.06, more preferably equal to or more than 0.1, and further preferably equal to or more than 0.2. Besides, as for a lower limit for Sdr, also, from the viewpoint of enhancing the active material adhesion on both surfaces, Sdr in both the first surface and the second surface is preferably equal to or more than 0.20%, more preferably equal to or more than 0.5%, and further preferably equal to or more than 1.0%. A lower limit for Sal is not particularly present, but, normally, a value equal to or more than 1 um is applied.

Note that for controlling the three-dimensional surface texture parameters Sv, Sz, Sa, Sdq, Sdr, and Sal in the electrolytic iron foil 10 in the present embodiment to fall within the abovementioned value ranges, a method of controlling plating conditions as described later, a method of polishing the surface of the support, a method of subjecting the surface of the electrolytic iron foil obtained to etching treatment, electrolytic polishing, or the like to control the ruggedness, and the like can be mentioned as an effective method.

Next, the thickness of the electrolytic iron foil 10 in the present embodiment will be described.

The thickness of the electrolytic iron foil 10 in the present embodiment is characterized by being less than 20 um. A thickness of equal to or more than 20 um does not, in the first place, conform to design idea in view of the background of seeking a higher capacity by reduction in film thickness, and further reduces a costbasis advantage to known rolled foils and the like.

Note that an upper limit for the thickness of the electrolytic iron foil 10 in the present embodiment is preferably equal to or less than 18 um, more preferably equal to or less than 15 um, and further preferably equal to or less than 12 um.

A lower limit for the thickness of the electrolytic iron foil 10 in the present embodiment is not particularly limited to any value, but is, for example, preferably 1.5 um. Such viewpoints as strength against the influences caused by charging and discharging and the risk of breakage, tearing, or wrinkling which may occur during manufacturing or handling of a battery can described as the reasons therefor.

Note that the lower limit for the thickness of the electrolytic iron foil 10 in the present embodiment is more preferably equal to or more than 5 um.

Note that the "thickness of the electrolytic iron foil 10" in the present embodiment can be acquired by thickness measurement using a micrometer or by thickness measurement using a gravimetric method.

Note that the tensile strength of the electrolytic iron foil 10 of the present embodiment is preferably equal to or more than 130 MPa. In the case where the tensile strength is less than 130 MPa, when the electrolytic iron foil 10 is applied to a current collector, there is a possibility of occurrence of breakage due to repetitive charging and discharging, which is unfavorable.

Note that a lower limit for the tensile strength of the electrolytic iron foil 10 in the present embodiment is more preferably equal to or more than 180 MPa, and further preferably equal to or more than 350 MPa. On the other hand, an upper limit for the tensile strength of the electrolytic iron foil 10 in the present embodiment is more preferably equal to or less than 800 MPa, and further preferably equal to or less than 700 MPa.

In addition, maximum load of the electrolytic iron foil 10 of the present embodiment is preferably equal to or more than 12.0 N, and more preferably equal to or more than 15.0 N. In the case where the maximum load is less than 12.0 N, there is a possibility of occurrence of tearing, breakage, or the like of the foil during manufacture of the electrolytic iron foil 10 or during manufacture of a battery, so that handling property (handleability) is lowered, which is unfavorable.

Note that the tensile strength and the maximum load of the electrolytic iron foil 10 in the present embodiment can be measured, for example, as follows. By an SD lever type sample cutter (model: SDL-200) made by DUMBBELL CO., LTD., a metallic piece of JIS K6251 dumbbell No. 4 depicted in FIG. 2 is die-cut by use of a cutter (model: SDK-400) according to JIS K6251. With this specimen, tensile test can be performed in accordance with a tensile test method according to JIS Z 2241 which is a JIS standard of metallic specimen.

Elongation of the electrolytic iron foil 10 of the present embodiment is preferably 1.2% to 15%, more preferably 1.5% to 15%, and further preferably 2.0% to 15%. In the case where elongation is less than 1.2%, when the electrolytic iron foil obtained is applied to a current collector of a secondary battery, it may be impossible to cope with repetitive charging and discharging, which is unfavorable. Note that the elongation of the electrolytic iron foil in the present embodiment refers to the value measured in accordance with a tensile test method according to JIS Z 2241, similarly to the tensile strength and the maximum load.

The electrolytic iron foil 10 of the present embodiment has the above-mentioned configuration, and hence, produces the following effects.

In other words, in the step of manufacturing a metallic foil as a current collector, the drying temperature may reach a temperature equal to or higher than 200°C (equal to or lower than 400°C), and a copper foil conventionally used as a current collector material may be lowered in strength due to the drying temperature.

Since iron has such material characteristics that lowering in strength due to the heating temperature band is slight, in the case where the electrolytic iron foil of the present embodiment is used as a current collector, lowering in strength due to heating during manufacturing and during handling (during assembly of a battery and during use as a current collector) can be suppressed.

Further, the electrolytic iron foil of the present embodiment is, even in the case of being a thin foil, capable of suppressing lowering in strength and elongation caused by influences of ruggedness or the like in the foil surface, by controlling Sv (maximum pit depth) [pm]/the thickness [um] of the electrolytic iron foil 10. Hence, in the case of using the electrolytic iron foil as a current collector, breakage or tearing of the foil during manufacturing and during handling (during assembly of a battery or during use as a current collector) can be suppressed, and an electrolytic iron foil having strength and elongation can be provided.

[Method of manufacturing electrolytic iron foil 10]

When the electrolytic iron foil 10 of the present embodiment is manufactured, an iron electroplating is formed on a support including a titanium plate, a stainless steel plate, or the like, after which the plating layer is peeled off from the support by a known method, whereby the electrolytic iron foil 10 is obtained.

Note that a specific material of the support is not limited to the titanium plate or the stainless steel plate, and other known metallic materials can be applied within such ranges as not to depart from the gist of the present invention.

Note that in the following, the titanium plate will also be referred to as a Ti substrate.

In regard of the iron electroplating bath, the following conditions can be mentioned.

[High-concentration iron plating conditions]

- Bath composition
  Iron chloride tetrahydrate: 500 to 1,000 g/L
- Temperature: 60°C to 110°C
- pH: equal to or less than 3.0
- Stirring: air stirring or jet stirring
- Current density: 3 to 100 A/dm$^2$

Note that the pH adjustment can be carried out using hydrochloric acid, sulfuric acid, or the like.

Note that, in the case where the temperature of the high-concentration iron plating bath is less than 60°C, the three-dimensional surface texture parameter Sv tends to be high, there is a possibility that precipitation of the layer cannot be performed, and there is a possibility of peeling off from the support due to an increase in stress during plating, which are unfavorable. From the viewpoint of enhancing manufacturing efficiency, the temperature is preferably equal to or higher than 85°C. On the other hand, while there is no particular upper limit for the bath temperature, in the case of being higher than 110°C, evaporation of the plating bath becomes vigorous, thus lowering productivity, which is unfavorable.

Note that, in the case where the pH of the high-concentration iron plating bath exceeds 3.0, the three-dimensional surface texture parameter Sv tends to be high, which is unfavorable. From the viewpoint of controlling the three-dimensional surface texture parameter Sv to a preferable value, it is preferable that the pH be equal to or less than 1.0. Note that in regard of current density, in the case where the pH is equal to or less than 1.0, the current density is preferably equal to or more than 5 A/dm$^2$, from the relation between solution rate of iron and precipitation rate of iron.

[Low-concentration iron plating conditions]

- Bath composition

  Iron chloride tetrahydrate: 200 to 500 g/L
  Total amount of any one or a plurality of salts of aluminum chloride, calcium chloride, beryllium chloride, manganese chloride, potassium chloride, chromium chloride, lithium chloride, sodium chloride, magnesium chloride, and titanium chloride: 20 to 300 g/L

Temperature: 25°C to 110°C
pH: equal to or less than 5.0
Stirring: air stirring or jet stirring
Current density: 3 to 100 A/dm$^2$

In the case where the current density of low-concentration iron plating is less than 3 A/dm$^2$, the three-dimensional surface texture parameter Sv tends to be high, there is a possibility that the foil cannot be fabricated, and there is a possibility of lowering in productivity, which are unfavorable. From the viewpoint of enhancing manufacturing efficiency, it is more preferable that the current density be equal to or more than 10 A/dm$^2$. On the other hand, in the case where the current density exceeds 100 A/dm$^2$, there is a possibility of occurrence of plating burning and there is a possibility of peeling off from the support due to an increase in stress during plating, which are unfavorable. From the viewpoint of suppression of plating burning and enhancement of productivity, it is more preferable that the current density be equal to or less than 80 A/dm$^2$. In addition, anti-pitting agent may be added in an appropriate amount.

In regard of the bath composition of the low-concentration iron plating, any of salts of aluminum chloride, calcium chloride, beryllium chloride, manganese chloride, potassium chloride, chromium chloride, lithium chloride, sodium chloride, magnesium chloride, and titanium chloride may be used singly or in combination and added.

In the plating bath at the time of forming the electrolytic iron foil 10 of the present embodiment, nickel may be contained as described above. With nickel added to the bath, the three-dimensional surface texture parameter Sv tends to be lower, making it possible to enhance strength and corrosion resistance of the foil. Besides, with nickel added to the bath, the current density in the plating conditions can be raised, producing an advantage of enhanced productivity.

In regard of a plating bath in the case of containing nickel, the following conditions can be mentioned.

- Bath composition

    Iron chloride tetrahydrate: 500 to 1,000 g/L
    Nickel chloride hexahydrate or nickel sulfate hexahydrate: 10 to 400 g/L

- Temperature: 60°C to 110°C
- pH: equal to or less than 3.0
- Stirring: air stirring or jet stirring
- Current density: 3 to 100 A/dm$^2$

As a method of manufacturing the electrolytic iron foil 10 of the present embodiment, the following steps can be mentioned in general.

First, after the support on which a plating layer is to be formed is subjected to pretreatments of polishing, wiping, water washing, pickling, and the like, the support is immersed in the above-exemplified plating bath, to form an electrolytic iron plating layer on the support. After the thus formed plating layer is dried, it is peeled off to obtain the electrolytic iron foil 10.

In the abovementioned step, the polishing of the pretreatments of the support will be described. When manufacturing the electrolytic iron foil 10 of the present embodiment, the surface shape of the support on which the plating layer is to be formed is substantially transferred to the plating layer, to be the one-side surface (substrate surface) of the electrolytic iron foil 10. In addition, the shape of the surface (electrolytic surface) of the electrolytic iron foil 10 is also more highly possibly influenced by the surface shape of the support as the thickness of the electrolytic iron foil 10 is thinner.

In other words, in the electrolytic iron foil as that of the present embodiment, though depending on the plating conditions, ruggedness of the plating particles precipitated by iron plating is liable to appear on the electrolytic surface. In addition, on the substrate surface side, large ruggedness present on the surface of the support is liable to be reflected.

Therefore, in the present embodiment, in order to control the value of the three-dimensional surface texture parameter Sv in each surface of the electrolytic iron foil 10 to fall within the abovementioned range, it is preferable to control the surface shape of the support, for example, to control the surface roughness Sa of the support.

Specifically, the surface roughness Sa of the support is preferably equal to or less than 0.25 um, more preferably equal to or less than 0.20 um, and further preferably equal to or less than 0.18 um. In addition, in the case where the plating bath for forming the electrolytic iron foil contains nickel, the surface roughness Sa of the support is particularly preferably equal to or less than 0.16 um. Besides, a lower limit for the surface roughness Sa of the support is not particularly limited to any value, but preferably is equal to or more than 0.01 um.

Controlling the surface roughness Sa of the support to the abovementioned value can be achieved, for example, by polishing the surface of the support by use of known means. Here, the polishing method is not particularly limited to any kind; polishing may be conducted in a specific direction such as a widthwise direction or a lengthwise direction of the support, or may be conducted at random.

Before or after peeling off the electrolytic iron foil 10 from the support, the outermost layer surface of the electrolytic iron foil 10 may be subjected to a roughening treatment, a rust-preventive treatment, or the like within such ranges that the problem of the present invention can be solved. In addition, a known treatment for imparting conductivity, such as carbon coating, may be conducted.

For example, provision of a nickel roughening layer or a copper roughening layer on both surfaces of the electrolytic iron foil 10 can enhance adhesion performance of active materials when the electrolytic iron foil is used as a current collector, which is favorable. Note that the roughening layer is disclosed in, for example, PCT Patent Publication No. WO2020/017655 or the like, so that detailed description thereof is omitted here.

Note that, in the present embodiment, as a method for controlling the surface roughness (three-dimensional surface texture) of the electrolytic iron foil 10, a method of controlling the plating conditions as described above and a method of polishing the surface of the support have been mentioned, but these are non-limitative. For example, a desired three-dimensional surface texture can be obtained by a method of smoothing the surface of the electrolytic iron foil 10 itself by etching treatment or electrolytic polishing or the like.

Note that, in the present embodiment, an example of manufacturing the electrolytic iron foil by a system for continuous manufacture with use of the support (for example, drum system or roll-to-roll system) has been described, but the present invention is not limited to this mode, and, for example, batch type manufacture with use of a cut plate can also be applied.

The electrolytic iron foil 10 in the present embodiment can be a laminated electrolytic foil having at least one metallic layer on at least one of the first surface 10a and the second surface 10b. In this case, examples of the metallic layer include layers of Cu, Ni, Co, Zn, Sn, Cr, and alloys thereof. Particularly, the metallic layer may be a nickel-iron alloy layer, to obtain a laminated electrolytic foil of the electrolytic iron foil 10 of the present embodiment and the nickel-iron alloy layer.

Examples

The present invention will be described more specifically by illustrating Examples. First, measuring methods in Examples will be described.

[Measurement of tensile strength, maximum load, and elongation]

The electrolytic foil obtained was subjected to measurement of tensile strength, maximum load, and elongation as follows. First, by an SD lever type sample cutter (model: SDL-200) made by DUMBBELL CO., LTD., a metallic piece was die-cut with use of a cutter (model: SDK-400) according to JIS K6251-4. Next, this specimen was subjected to a tensile test in accordance with a tensile test method according to JIS Z 2241 which is a JIS standard for metallic specimen. A schematic view of the specimen is depicted in FIG. 2.

Note that as a device for tensile test, a tensile testing machine (universal material testing machine; TENSILON RTC-1350A; made by ORIENTEC CORPORATION) was used. In addition, the measurement conditions were room temperature and a tensile speed of 10 mm/min.

Elongation was calculated by the following formula.

$$\text{(Moving distance (stroke) of testing machine)}/\text{(original gage length)} \times 100$$

In addition, the maximum testing force in the tensile test is set forth in the table as maximum load [N]. The results are set forth in Table 3.

[Measurement of thickness]

The electrolytic foil obtained was subjected to measurement of thickness with use of a micrometer. The thus obtained value is set forth in the column "measured thickness" in Table 1.

[Measurement of surface shape]

In the electrolytic foil obtained, the surface (substrate surface) that has been in contact with the support was referred to as the first surface and the surface on the other side was referred to as the second surface, and a surface shape of each surface was measured. Specifically, by use of a laser microscope OLS5000 made by Olympus Corporation, three-dimensional surface texture parameters Sv [μm] (maximum pit depth), Sz [μm] (maximum height), Sa [μm] (arithmetical mean height), Sdq (root mean square gradient), Sdr (developed interfacial area ratio), and Sal (autocorrelation length) were measured. Then, Sv [μm]/measured thickness [um] was calculated. Note that, in the present embodiment, the three-dimensional surface texture parameters are the values measured according to ISO-25178-2:2012 (corresponding JIS B-0681-2:2018).

As a measuring method, an objective lens with a magnifying power of 50 (lens name: MPLAPON50XLEXT) was used to scan three visual fields (one visual field: 258 um × 258 um), to thereby obtain analysis data. Next, the thus obtained analysis data was subjected to noise reduction and gradient correction which are automatic correction treatments by use of an analysis application. Thereafter, an icon of surface roughness measurement was clicked to perform analysis, to thereby obtain various parameters of surface roughness. Note that filter conditions (F calculation, S filter, L filter) in the analysis were not all set, and analysis was conducted in the condition of absence of filter condition. The results are set forth in Table 2 (the values of parameters are averages of three visual fields).

[Manufacture of negative electrode plate and evaluation of active material adhesion]

With use of artificial graphite (particle diameter: approximately 10 um) as a negative electrode active material and polyvinylidene fluoride (PVDF) as a binder, an appropriate amount of N-methylpyrrolidone (NMP) was added to a mixture of 96 wt% of the negative electrode active material and 4 wt% of the binder to adjust the viscosity and to produce a negative electrode compound paste. The negative electrode compound paste was applied to the electrolytic surface side of an electrolytic foil and dried, to produce a negative electrode plate. In this instance, the total weight of the negative electrode active material and the binder, after dried, is 5 mg/cm$^2$.

Evaluation of active material adhesion was performed by a 180° folding test of the negative electrode plate, with the applied surface on the outside, and the presence or absence of peeling off of the negative electrode active material was checked. The results are set forth in Table 3.

At the folded part,

the case where peeling off of the active material is absent is evaluated as A,
the case where exposure of the substrate cannot be confirmed at the folded part by visual inspection but peeling off is present only at a part is evaluated as B,
the case where exposure of the substrate can be confirmed at the folded part by visual inspection and peeling off is present at parts is evaluated as C, and
the case where the active material is peeled off at the folded part and in the vicinity thereof and exposure of the substrate is confirmed by visual inspection is evaluated as D.

<Example 1>

An electrolytic iron plating was formed on a support. Specifically, first, a Ti substrate was used as the support an upper surface on which the electrolytic iron foil is to be formed, and the surface of the Ti substrate was polished, to set the surface roughness Sa of the Ti substrate to the value set forth in Table 1. The direction of polishing was substantially parallel to the lengthwise direction of the Ti substrate (moving forward direction in continuous manufacture, longitudinal direction). This Ti substrate was subjected to known pretreatments such as pickling using 7 wt% sulfuric acid and water washing. Next, the pretreated Ti substrate was immersed in an iron plating bath as follows to perform electrodeposition, and an electrolytic iron plating layer having the thickness set forth in Table 1 was formed on the Ti substrate as an electrolytic foil.

[Iron plating conditions]

- Bath composition
  Iron chloride tetrahydrate: 725 g/L
- Temperature: 90°C
- pH: 1.0
- Stirring: air stirring
- Current density: 10 A/dm$^2$

After the thus formed plating layer was sufficiently dried, the plating layer was peeled off from the Ti substrate, to obtain an electrolytic iron foil. The thickness of the electrolytic iron foil obtained is the numerical value set forth in "measured thickness" in Table 1.

The thus obtained electrolytic iron foil was subjected to measurement of tensile strength, maximum load, and elongation, measurement of thickness, measurement of surface shapes of the electrolytic surface and the substrate surface, and evaluation of adhesion with the active material. The results are set forth in Tables 1 to 3.

Note that contents of Fe and Mn in the electrolytic iron foil were pure iron with equal to or more than 99.9 wt% of Fe and less than 0.01 wt% of Mn. By the Mn content, it was confirmed that the obtained foil is not a rolled iron foil (see the discrimination method A described later). The content rates of Fe and Mn are numerical values obtained by calculation. In calculation, first, the electrolytic iron foil of Example 1 was dissolved, and Mn content was measured by ICP emission analysis (measuring device: inductively coupled plasma emission spectrochemical analysis device ICPE-9000 made by SHIMADZU CORPORATION). In this instance, the remaining other than Mn was deemed as Fe, and Fe content was calculated. Based on the contents of Fe and Mn, the content rate of each metal was calculated.

<Example 2>

A process similar to that of Example 1 was conducted, except that the thickness was as set forth in Table 1. The results are set forth in Tables 1 to 3.

<Examples 3 and 4>

A process similar to that of Example 1 was conducted, except that the plating conditions were as follows and the thickness was as set forth in Table 1. The results are set forth in Tables 1 to 3.

- Bath composition

    Iron chloride tetrahydrate: 725 g/L
    Nickel chloride hexahydrate: 75 g/L

- Temperature: 90°C
- pH: 1.0
- Stirring: air stirring
- Current density: 20 A/dm$^2$

Note that, in Example 3, the content rates of Fe, Ni, and Mn in the electrolytic iron plating layer were Fe: 93.1 wt%, Ni: 6.9 wt%, and Mn: less than 0.01 wt%, containing nickel as a sub-component. By the Mn content rate, it was confirmed that the obtained foil is not a rolled foil (see the discrimination method A described later). The content rates of Fe, Ni, and Mn are numerical values obtained by calculation. In calculation, first, the electrolytic iron plating layer of Example 3 was dissolved, and the contents of Ni and Mn were measured by ICP emission analysis (measuring device: inductively coupled plasma emission spectrochemical analysis device ICPE-9000 made by SHIMADZU CORPORATION). In this instance, the remaining other than Ni and Mn was deemed as Fe, whereby Fe content was calculated. Based on the contents of Fe, Ni, and Mn, the content rate of each metal was calculated.

<Examples 5 to 10>

Iron plating conditions were as follows. A process similar to that of Example 1 was conducted, except that current density (A/dm$^2$), thickness, and surface roughness Sa of the Ti substrate were as set forth in Table 1. The results are set forth in Tables 1 to 3.

- Bath composition

    Iron chloride tetrahydrate: 300 g/L
    Aluminum chloride hexahydrate: 180 g/L

- Temperature: 90°C
- pH: 1.0
- Stirring: air stirring

<Examples 11 to 13>

Iron plating conditions were as follows. A process similar to that of Example 1 was conducted, except that current density (A/dm$^2$), thickness, and surface roughness Sa of the Ti substrate were as set forth in Table 1. The results are set forth in Tables 1 to 3.

- Bath composition

    Iron chloride tetrahydrate: 400 g/L
    Calcium chloride: 180 g/L
    Sodium saccharin: 3 g/L
    Sodium dodecyl sulfate: 0.1 g/L
    Sodium gluconate: 2 g/L

- Temperature: 90°C
- pH: 1.5
- Stirring: air stirring

<Examples 14 to 18 and 25 to 27>

Iron plating conditions were as follows. A process similar to that of Example 1 was conducted, except that current density (A/dm$^2$), thickness, and surface roughness Sa of the Ti substrate were as set forth in Table 1. The results are set forth in Tables 1 to 3.

- Bath composition
  Iron chloride tetrahydrate: 1,000 g/L
- Temperature: 90°C
- pH: equal to or less than 1.0
- Stirring: air stirring

<Example 19>

Continuous electrodeposition was conducted while current density was modified as illustrated in Table 1 during electroplating. In other words, as indicated by "lower 5/upper 15" in Table 1, after a lower layer with a target thickness of 1 um was formed with 5 A/dm$^2$, an upper layer was formed with 15 A/dm$^2$, with the thickness being set as set forth in Table 1. In other points, a similar process to that of Example 14 was conducted. The results are set forth in Tables 1 to 3.

<Example 20>

Continuous electrodeposition was conducted while current density was modified as in Example 19 as illustrated in Table 1 during electroplating. In other words, as indicated by "lower 5/upper 15" in Table 1, after a lower layer of a target thickness of 5 um was formed with 5 A/dm$^2$, an upper layer was formed with 5 A/dm$^2$, with the thickness being set as set forth in Table 1. In other points, a similar process to that of Example 14 was conducted. The results are set forth in Tables 1 to 3.

<Example 21>

Continuous electrodeposition was conducted while current density was modified as illustrated in Table 1 during electroplating. In other words, as indicated by "lower 15/upper 5" in Table 1, after a lower layer of a target thickness of 10 um was formed with 15 A/dm$^2$, an upper layer was formed with 5 A/dm$^2$, with the thickness being set as set forth in Table 1. In other points, a similar process to that of Example 14 was conducted. The results are set forth in Tables 1 to 3.

<Examples 22 to 24>

A process similar to that of Example 14 was conducted, except that the thickness was as set forth in Table 1. The electrolytic iron foils obtained were subjected to annealing with temperature and time as set forth in Table 1 by box annealing. The results are set forth in Tables 1 to 3.

<Example 28>

A Ti substrate pretreated as in Example 1 was immersed in an iron plating bath as follows and electrodeposition was performed, whereby an electrolytic iron plating layer of a thickness set forth in Table 1 was formed on the Ti substrate as an electrolytic foil. Note that the surface roughness Sa of the Ti substrate was made to have the value in Table 1. The results are set forth in Tables 1 to 3.

- Bath composition
  Iron chloride tetrahydrate: 1,000 g/L
- Temperature: 105°C
- pH: 1.0
- Stirring: air stirring
- Current density: 50 A/dm$^2$

<Examples 29 to 30>

A process similar to that of Example 28 was conducted, except that the thickness was set to the value set forth in Table 1. The results are set forth in Tables 1 to 3.

<Example 31>

A process similar to that of Example 1 was conducted, except that iron plating conditions were as follows and the thickness was as set forth in Table 1. The results are set forth in Tables 1 to 3.

- Bath composition

    Iron chloride tetrahydrate: 500 g/L
    Nickel chloride hexahydrate: 200 g/L

- Temperature: 100°C
- pH: 1.0
- Stirring: air stirring
- Current density: 20 A/dm$^2$

Note that in Example 31, the content rates of Fe, Ni, and Mn in the electrolytic iron plating layer were Fe: 86.0 wt%, Ni: 14.0 wt%, and Mn: less than 0.01 wt%. The content rates of Fe, Ni, and Mn are numerical values obtained by calculation. In calculation, first, the electrolytic iron plating layer of Example 31 was dissolved, and contents of Ni and Mn were measured by ICP emission analysis (measuring device: inductively coupled plasma emission spectrochemical analysis device ICPE-9000 made by SHIMADZU CORPORATION). In this instance, the remaining other than Ni and Mn was deemed as Fe, and Fe content was calculated. Based on the contents of Fe, N, and Mn, the content rate of each metal was calculated.

<Example 32>

An electrolytic iron foil obtained as in Example 31 was subjected to annealing with temperature and time as set forth in Table 1 by box annealing. The results are set forth in Tables 1 to 3.

<Comparative Example 1>

A process similar to that of Example 1 was conducted, except that the surface roughness Sa of the Ti substrate was set as set forth in Table 1. The results are set forth in Tables 1 to 3.

<Comparative Example 2>

A process similar to that of Example 3 was conducted, except that the surface roughness Sa of the Ti substrate was set as set forth in Table 1. The results are set forth in Tables 1 to 3.

<Comparative Example 3>

A rolled iron foil (model: FE-223171 made by The Nilaco Corporation) of the thickness as set forth in Table 1 was used. The results are set forth in Tables 1 to 3.

Note that the content rates of Fe and Mn in the rolled iron foil were Fe: 99.67 wt% and Mn: equal to or more than 0.33 wt%. The content rates of Fe and Mn are numerical values obtained by calculation. In calculation, first, the rolled iron foil of Comparative Example 3 was dissolved, and the content of Mn was measured by ICP emission analysis (measuring device: inductively coupled plasma emission spectrochemical analysis device ICPE-9000 made by SHIMADZU CORPORATION). In this instance, the remaining other than Mn was deemed as Fe, and the content of Fe was calculated. Based on the contents of Fe and Mn, the content rate of each metal was calculated.

<Comparative Example 4>

Under the following plating conditions, an electrolytic copper foil was formed on a Ti substrate. The thickness and the substrate surface roughness were set as set forth in Table 1. The results are set forth in Tables 1 to 3.

- Bath composition

    Copper sulfate pentahydrate: 200 g/L
    Sulfuric acid: 45 g/L

- Temperature: 35°C

- pH: equal to or less than 1.0

- Stirring: air stirring

- Current density: 10 A/dm$^2$

<Comparative Example 5>

An electrolytic copper foil obtained as in Comparative Example 4 was subjected to annealing with temperature and time as set forth in Table 1 by box annealing. The results are set forth in Tables 1 to 3.
[Table 1]

| | | Plating conditions | | | Ti substrate surface roughness Sa [μm] | Annealing conditions |
|---|---|---|---|---|---|---|
| | | Kind of metal | Current density [A/dm$^2$] | Measured thickness [μm] | | |
| Example 1 | | Fe | 10 | 6.1 | 0.1 | Not conducted |
| Example 2 | | Fe | 10 | 10.1 | 0.1 | Not conducted |
| Example 3 | | Fe, Ni | 20 | 6.7 | 0.1 | Not conducted |
| Example 4 | | Fe, Ni | 20 | 11.0 | 0.1 | Not conducted |
| Example 5 | | Fe | 3 | 11.5 | 0.05 | Not conducted |
| Example 6 | | Fe | 5 | 11.6 | 0.05 | Not conducted |
| Example 7 | | Fe | 3 | 13.3 | 0.1 | Not conducted |
| Example 8 | | Fe | 5 | 11.7 | 0.1 | Not conducted |
| Example 9 | | Fe | 3 | 18.7 | 0.1 | Not conducted |
| Example 10 | | Fe | 5 | 168 | 0.1 | Not conducted |
| Example 11 | | Fe | 5 | 11.2 | 005 | Not conducted |

(continued)

| | Plating conditions | | | Ti substrate surface roughness Sa [μm] | Annealing conditions |
|---|---|---|---|---|---|
| | Kind of metal | Current density [A/dm²] | Measured thickness [μm] | | |
| Example 12 | Fe | 5 | 11.6 | 0.1 | Not conducted |
| Example 13 | Fe | 10 | 11.7 | 0.1 | Not conducted |
| Example 14 | Fe | 10 | 10.3 | 0.1 | Not conducted |
| Example 15 | Fe | 5 | 15.0 | 0.075 | Not conducted |
| Example 16 | Fe | 5 | 18.7 | 0.1 | Not conducted |
| Example 17 | Fe | 10 | 16.4 | 0.1 | Not conducted |
| Example 18 | Fe | 15 | 16.3 | 0.1 | Not conducted |
| Example 19 | Fe | lower 5/upper 15 | 16.6 | 0.1 | Not conducted |
| Example 20 | Fe | lower 5/upper 15 | 19.5 | 0.1 | Not conducted |
| Example 21 | Fe | lower 15/upper 5 | 19.6 | 0.1 | Not conducted |
| Example 22 | Fe | 10 | 16.4 | 0.1 | 350°C 4h |
| Example 23 | Fe | 10 | 16.8 | 0.1 | 600°C 4h |
| Example 24 | Fe | 10 | 15.8 | 0.1 | 750°C 4h |
| Example 25 | Fe | 10 | 18.8 | 0.2 | Not conducted |
| Example 26 | Fe | 20 | 10.2 | 0.2 | Not conducted |
| Example 27 | Fe | 30 | 9.8 | 0.2 | Not conducted |
| Example 28 | Fe | 50 | 8.7 | 0.2 | Not conducted |
| Example 29 | Fe | 50 | 14.7 | 0.2 | Not conducted |
| Example 30 | Fe | 50 | 18.8 | 0.2 | Not conducted |
| Example 31 | Fe, Ni | 20 | 10.7 | 0.2 | Not conducted |
| Example 32 | Fe, Ni | 20 | 10.8 | 0.2 | 300°C 12h |
| Comparative example 1 | Fe | 10 | 5.5 | 0.2 | Not conducted |
| Comparative example 2 | Fe, Ni | 20 | 5.9 | 0.2 | Not conducted |
| Comparative example 3 | Rolled Fe | - | 11.6 | - | Not conducted |
| Comparative example 4 | Cu | 10 | 12.0 | 0.1 | Not conducted |
| Comparative example 5 | Cu | 10 | 12.1 | 0.1 | 350°C 4h |

[Table 2]

| | Electrolytic surface (second surface) | | | | | | | Substrate surface (first surface) | | | | | | |
|---|---|---|---|---|---|---|---|---|---|---|---|---|---|---|
| | Sv [μm] | Sv/ thickness | Sz [μm] | Sa [μm] | Sdq | Sdr [%] | Sal [μm] | Sv [μm] | Sv/ thickness | Sz [μm] | Sa [μm] | Sdq | Sdr [%] | Sal [μm] |
| Example 1 | 1.03 | 0.17 | 3.10 | 0.16 | 0.46 | 9.39 | 6.55 | 0.77 | 0.13 | 1.46 | 0.11 | 0.13 | 0.81 | 24.73 |
| Example 2 | 1.35 | 0.13 | 2.93 | 0.21 | 0.51 | 11.07 | 3.82 | 0.80 | 0.08 | 1.66 | 0.11 | 0.17 | 1.44 | 12.26 |
| Example 3 | 0.97 | 0.15 | 2.13 | 0.18 | 0.50 | 10.81 | 11.76 | 1.19 | 0.18 | 2.14 | 0.18 | 0.16 | 1.18 | 48.20 |
| Example 4 | 1.44 | 0.13 | 3.61 | 0.25 | 0.55 | 12.54 | 4.74 | 1.21 | 0.11 | 2.98 | 0.14 | 0.14 | 0.97 | 20.61 |
| Example 5 | 2.46 | 0.21 | 5.25 | 0.37 | 0.70 | 17.54 | 3.61 | 0.36 | 0.03 | 1.11 | 0.04 | 0.06 | 0.15 | 31.11 |
| Example 6 | 1.97 | 0.17 | 4.68 | 0.30 | 0.61 | 14.56 | 3.23 | 0.32 | 0.03 | 1.25 | 0.04 | 0.05 | 0.11 | 48.16 |
| Example 7 | 3.53 | 0.27 | 6.91 | 0.45 | 0.69 | 16.77 | 4.49 | 0.64 | 0.05 | 1.80 | 0.09 | 0.12 | 0.68 | 7.52 |
| Example 8 | 1.95 | 0.17 | 4.26 | 0.31 | 0.58 | 13.39 | 4.03 | 0.64 | 0.05 | 1.71 | 0.10 | 0.11 | 0.62 | 6.34 |
| Example 9 | 3.44 | 0.18 | 6.65 | 0.54 | 0.79 | 20.14 | 4.87 | 0.50 | 0.03 | 1.27 | 0.09 | 0.14 | 1.02 | 8.10 |
| Example 10 | 2.24 | 0.13 | 4.74 | 0.34 | 0.65 | 16.45 | 3.78 | 0.58 | 0.03 | 1.83 | 0.09 | 0.14 | 0.96 | 8.40 |
| Example 11 | 1.83 | 0.16 | 4.69 | 0.30 | 0.70 | 17.98 | 2.90 | 0.45 | 0.04 | 1.00 | 0.04 | 0.11 | 0.60 | 28.38 |
| Example 12 | 2.03 | 0.17 | 4.85 | 0.33 | 0.73 | 19.42 | 3.07 | 0.80 | 0.07 | 2.00 | 0.10 | 0.17 | 1.38 | 7.18 |
| Example 13 | 1.84 | 0.16 | 4.37 | 0.31 | 0.68 | 17.69 | 3.28 | 0.66 | 0.06 | 1.55 | 0.10 | 0.15 | 1.01 | 8.23 |
| Example 14 | 0.89 | 0.09 | 2.17 | 0.18 | 0.35 | 5.67 | 6.42 | 0.74 | 0.07 | 1.62 | 0.11 | 0.12 | 0.76 | 8.06 |
| Example 15 | 3.67 | 0.24 | 6.76 | 0.54 | 0.70 | 15.93 | 5.12 | 0.45 | 0.03 | 0.92 | 0.08 | 0.14 | 0.87 | 9.36 |
| Example 16 | 3.67 | 0.20 | 7.06 | 0.58 | 0.70 | 16.58 | 5.50 | 0.74 | 0.04 | 1.38 | 0.10 | 0.13 | 0.75 | 7.43 |
| Example 17 | 1.30 | 0.08 | 2.88 | 0.25 | 0.41 | 7.58 | 4.32 | 0.64 | 0.04 | 2.17 | 0.08 | 0.13 | 0.77 | 7.39 |
| Example 18 | 2.00 | 0.12 | 4.46 | 0.34 | 0.52 | 11.18 | 4.11 | 0.96 | 0.06 | 2.15 | 0.12 | 0.15 | 1.06 | 9.61 |
| Example 19 | 2.55 | 0.15 | 5.30 | 0.43 | 0.62 | 14.21 | 4.37 | 0.87 | 0.05 | 3.05 | 0.10 | 0.20 | 1.81 | 6.05 |
| Example 20 | 3.56 | 0.18 | 7.32 | 0.56 | 0.65 | 14.20 | 5.79 | 1.41 | 0.07 | 3.14 | 0.12 | 0.29 | 4.05 | 6.59 |
| Example 21 | 3.23 | 0.16 | 7.70 | 0.50 | 0.67 | 15.38 | 4.79 | 1.46 | 0.07 | 3.24 | 0.11 | 0.28 | 3.86 | 9.78 |
| Example 22 | 2.46 | 0.15 | 5.57 | 0.46 | 0.59 | 13.27 | 4.87 | 0.63 | 0.04 | 1.72 | 0.08 | 0.15 | 1.14 | 8.86 |
| Example 23 | 2.06 | 0.12 | 5.30 | 0.36 | 0.51 | 10.74 | 4.83 | 0.67 | 0.04 | 1.85 | 0.09 | 0.17 | 1.47 | 9.40 |

EP 4 183 905 A1

(continued)

| | Electrolytic surface (second surface) | | | | | | | Substrate surface (first surface) | | | | | | |
|---|---|---|---|---|---|---|---|---|---|---|---|---|---|---|
| | Sv [μm] | Sv/ thickness | Sz [μm] | Sa [μm] | Sdq | Sdr [%] | Sal [μm] | Sv [μm] | Sv/ thickness | Sz [μm] | Sa [μm] | Sdq | Sdr [%] | Sal [μm] |
| Example 24 | 1.54 | 0.10 | 3.34 | 0.30 | 0.31 | 4.57 | 4.79 | 0.55 | 0.03 | 1.30 | 0.10 | 0.10 | 0.45 | 7.64 |
| Example 25 | 1.79 | 0.10 | 4.63 | 0.25 | 0.37 | 6.34 | 5.93 | 2.35 | 0.13 | 5.44 | 0.17 | 0.23 | 2.25 | 7.44 |
| Example 26 | 1.36 | 0.13 | 2.96 | 0.20 | 0.38 | 6.44 | 8.65 | 1.31 | 0.13 | 2.45 | 0.14 | 0.24 | 2.51 | 4.79 |
| Example 27 | 1.91 | 0.19 | 4.06 | 0.25 | 0.44 | 8.55 | 4.66 | 2.01 | 0.21 | 3.93 | 0.17 | 0.26 | 2.87 | 5.33 |
| Example 28 | 1.37 | 0.16 | 2.73 | 0.22 | 0.46 | 9.44 | 6.09 | 0.71 | 0.08 | 2.02 | 0.13 | 0.18 | 1.63 | 6.63 |
| Example 29 | 1.73 | 0.12 | 4.32 | 0.34 | 0.56 | 12.76 | 5.08 | 0.82 | 0.06 | 2.43 | 0.12 | 0.21 | 2.17 | 12.47 |
| Example 30 | 2.32 | 0.12 | 5.54 | 0.43 | 0.71 | 18.28 | 3.86 | 0.96 | 0.05 | 1.90 | 0.16 | 0.17 | 1.41 | 18.01 |
| Example 31 | 1.42 | 0.13 | 3.19 | 0.24 | 0.53 | 11.91 | 3.23 | 0.79 | 0.07 | 1.45 | 0.10 | 0.21 | 2.08 | 9.91 |
| Example 32 | 1.32 | 0.12 | 3.12 | 0.24 | 0.52 | 11.34 | 3.28 | 0.79 | 0.07 | 1.51 | 0.09 | 0.15 | 1.21 | 6.42 |
| Comparative example 1 | 1.51 | 0.28 | 3.07 | 0.22 | 0.45 | 9.14 | 15.79 | 1.38 | 0.25 | 3.93 | 0.19 | 0.23 | 2.38 | 21.08 |
| Comparative example 2 | 1.61 | 0.28 | 4.05 | 0.34 | 0.50 | 11.03 | 29.22 | 2.17 | 0.37 | 5.15 | 0.25 | 0.25 | 2.80 | 28.38 |
| Comparative example 3 | 1.52 | 0.13 | 2.73 | 0.35 | 0.05 | 0.15 | 34.68 | 1.52 | 0.13 | 2.73 | 0.35 | 0.05 | 0.15 | 34.68 |
| Comparative example 4 | 1.32 | 0.11 | 6.10 | 0.24 | 0.42 | 7.89 | 5.12 | 1.11 | 0.09 | 1.79 | 0.13 | 0.16 | 1.27 | 9.32 |
| Comparative example 5 | 1.48 | 0.12 | 3.43 | 0.30 | 0.36 | 5.99 | 29.68 | 0.96 | 0.08 | 1.85 | 0.17 | 0.16 | 1.33 | 30.10 |

EP 4 183 905 A1

[Table 3]

| | Mechanical properties | | | Adhesion evaluation | |
|---|---|---|---|---|---|
| | Maximum load [N] | Tensile strength [MPa] | Elongation [%] | Electrolytic surface (second surface) | Substrate surface (first surface) |
| Example 1 | 18.4 | 604 | 2.4 | A | B |
| Example 2 | 28.8 | 574 | 2.3 | A | A |
| Example 3 | 20.0 | 597 | 2.5 | A | B |
| Example 4 | 36.4 | 664 | 3.8 | A | B |
| Example 5 | 26.2 | 455 | 5.2 | A | D |
| Example 6 | 28.5 | 492 | 5.8 | A | D |
| Example 7 | 24.5 | 369 | 5.0 | A | B |
| Example 8 | 30.5 | 522 | 5.2 | A | B |
| Example 9 | 39.6 | 424 | 3.0 | A | A |
| Example 10 | 46.3 | 551 | 4.0 | A | B |
| Example 11 | 29.5 | 526 | 2.5 | A | B |
| Example 12 | 31.9 | 550 | 2.7 | A | A |
| Example 13 | 32.9 | 562 | 2.8 | A | A |
| Example 14 | 29.0 | 563 | 3.8 | A | B |
| Example 15 | 40.5 | 540 | 7.6 | A | B |
| Example 16 | 33.7 | 360 | 2.8 | A | B |
| Example 17 | 43.7 | 533 | 3.3 | A | B |
| Example 18 | 39.8 | 488 | 5.2 | A | A |
| Example 19 | 41.9 | 505 | 5.3 | A | A |
| Example 20 | 40.5 | 415 | 7.7 | A | A |
| Example 21 | 41.5 | 423 | 7.8 | A | A |
| Example 22 | 33.1 | 403 | 4.1 | A | A |
| Example 23 | 16.8 | 201 | 8.3 | A | A |
| Example 24 | 12.0 | 152 | 11.4 | A | C |
| Example 25 | 49.6 | 529 | 2.9 | A | A |
| Example 26 | 26.4 | 517 | 1.3 | A | A |
| Example 27 | 22.9 | 467 | 1.5 | A | A |
| Example 28 | 21.1 | 486 | 2.6 | A | A |
| Example 29 | 33.5 | 456 | 3.7 | A | A |
| Example 30 | 48.2 | 515 | 6.5 | A | A |
| Example 31 | 35.2 | 659 | 4.0 | A | A |
| Example 32 | 36.4 | 677 | 3.0 | A | A |
| Comparative example 1 | 5.9 | 217 | 1.2 | A | A |

(continued)

| | Mechanical properties | | | Adhesion evaluation | |
|---|---|---|---|---|---|
| | Maximum load [N] | Tensile strength [MPa] | Elongation [%] | Electrolytic surface (second surface) | Substrate surface (first surface) |
| Comparative example 2 | 11.0 | 376 | 2.2 | A | A |
| Comparative example 3 | 26.3 | 453 | 0.9 | D | D |
| Comparative example 4 | 17.9 | 299 | 6.1 | A | B |
| Comparative example 5 | 7.2 | 119 | 11.3 | A | B |

It was confirmed that each of Examples has such characteristic properties as favorable tensile strength, maximum load, and elongation. On the other hand, it was confirmed that Comparative Examples could not achieve the objectives in terms of tensile strength or elongation.

More specifically, in Example 1, Sv/thickness of both surfaces is equal to or less than 0.27, and hence, Example 1 has such favorable properties as tensile strength, maximum load, and elongation. On the other hand, in Comparative Example 1 in which the electrolytic iron foil was produced in the same conditions, Sv/thickness of one surface exceeds 0.27, and Comparative Example 1 is considered to have a locally weak part, so that it was found that tensile strength and maximum load which are intrinsic properties do not develop sufficiently. When Example 3 and Comparative Example 2 are compared with each other, in electrolytic iron foils produced under the same conditions, Comparative Example 2 in which Sv/thickness exceeds 0.27 has each property being inferior to Example 3, and it was found that intrinsic properties do not appear.

Further, in Example 22 in which the electrolytic iron foil produced in the same conditions as those in Example 17 was annealed at a temperature of 350°C for 4 hours, though tensile strength was lowered by approximately 24%, sufficient tensile strength and maximum load could be maintained, making it clear that lowering in tensile strength can be suppressed even when heated in the battery manufacturing process. On the other hand, when Comparative Example 4 and Comparative Example 5 of copper foil samples are compared with each other, the copper foils have tensile strength and maximum load lowered by approximately 60% and are conspicuously softened when heated at 350°C, so that in the case of using the copper foils as a current collector, it can be recognized that the foil has the risk of breakage or tearing during manufacturing and during handling. In addition, in other Examples, also, setting Sv/thickness of both surfaces to a value of equal to or less than 0.27 allows each property to be set in a favorable range.

Besides, in each Example, it was confirmed that at least one surface (the first surface or the second surface) has adhesion with the active material. On the other hand, it was confirmed that the rolled iron foil in Comparative Example 2 does not have the abovementioned property.

More specifically, in Examples 1 to 32, in the case where the value of Sdq (root mean square gradient) or Sdr (developed interfacial area ratio) in at least either one surface is large, or where the value of Sal (autocorrelation length) is small, it was confirmed that the effect of the binder is sufficiently displayed and adhesion with the active material is excellent.

In addition, in Examples 1 to 4 and 7 to 32, the value of Sdq or Sdr in the first surface and the second surface is controlled to be large and the value of Sal is controlled to be small, and it was confirmed that both surfaces are excellent in adhesion with the active material.

On the other hand, in Examples 5 and 6, the value of Sdq or Sdr in at least either one surface (the first surface or the second surface) is controlled to be large and the value of Sal is controlled to be small, so that the surface is excellent in adhesion with the active material; however, the value of Sdq or Sdr in the other surface is small and the value of Sal is large, so that the action of the binder is not effective, and it was confirmed that the surface is poor in adhesion with the active material. In addition, in Comparative Example 3, the value of Sdq or Sdr in the first surface and the second surface is small and the value of Sal is large, so that it was confirmed that the surfaces are poor in adhesion with the active material.

Note that while there are various discrimination methods for the electrolytic iron foil illustrated in Examples and the rolled iron foil illustrated in Comparative Example 3, the main discrimination methods will be described below.

<Discrimination method A>

As a discrimination method for the electrolytic iron foil and the rolled iron foil from the viewpoint of chemical composition, there can be mentioned quantitative analysis by ICP emission analysis. Specifically, since, in the case where the rolled iron foil is manufactured in blast furnace or electric furnace, it is difficult to suppress mixing of manganese (Mn) to or below a certain level, when the foil contains Mn in an amount of equal to or more than 0.3 wt% among all elemental ingredients, the foil can be determined to be a rolled iron foil. On the other hand, when the content of Mn in the foil is less than 0.05 wt%, the foil can be determined to be an electrolytic iron foil. Note that this quantitative analysis by ICP emission analysis is effective discrimination means for both pre-annealing and post-annealing foils.

<Discrimination method B>

As a discrimination method for the electrolytic iron foil and the rolled iron foil from the viewpoint of crystalline orientation index, there can be mentioned confirmation of diffraction peaks by X-ray diffraction. Specifically, in the case where the crystalline orientation index is calculated from the intensity ratio of diffraction peaks by X-ray diffraction, the rolled iron foil tends to strongly exhibit the orientation of (211) plane. In addition, in the rolled iron foil, the influence of (211) plane remains strong, as compared with the electrolytic iron foil, even after annealing. On the other hand, in the case of the electrolytic iron foil, the orientation of (110) plane is relatively strong, so that orientation of (211) plane tends to be not so strong, and it is possible to discriminate the electrolytic iron foil and the rolled iron foil according to the orientation of (211) plane.
Note that in the case of more accurately discriminating the electrolytic iron foil and the rolled iron foil after a heat treatment, this method is preferably used together with the discrimination method A.

<Discrimination method C>

It is possible to discriminate the electrolytic iron foil and the rolled iron foil from the viewpoint of crystal structure. In other words, in the case of observing the crystal structure of the pre-annealing rolled iron foil, such crystal grains as being elongated in the rolling direction are observed in the surface, and in the case of observing a section, the foil includes a plurality of crystal grains in the plate thickness direction, and the crystal grains are elongated in the rolling direction. On the other hand, in the case of the electrolytic iron foil, such crystal grins as being elongated in the rolling direction are not present in the surface, and such a structure as being grown from the substrate surface side toward the electrolytic surface side appears in a section.
Note that since the crystal structure varies by heat treatment, while this discrimination method can be applied to the post-heat treatment material depending on the heat treatment conditions, basically, this method is preferably used together with the discrimination methods A and B for discriminating the post-heat treatment electrolytic iron foil and rolled iron foil.

<Discrimination method D>

It is possible to discriminate the electrolytic iron foil and the rolled iron foil from the viewpoint of surface roughness. Specifically, in the case where the three-dimensional surface texture parameters (Sdq, Sdr, Sal, and the like) are measured by a laser microscope, roll marks peculiar to rolling are formed on both surfaces of the rolled iron foil, so that Sdq, Sdr, and Sal often fall outside the range of the numerical values described as preferable values in the present embodiment. On the other hand, in the case of the electrolytic iron foil, the roughness of the substrate is liable to be transferred onto the substrate surface, so that the surface has a roughness similar to the surface roughness of the rolled iron foil, but, on the electrolytic surface, surface ruggedness attendant on the peculiar crystal growth precipitated by electrolysis is present, and Sdq, Sdr, and Sal fall within range of the numerical values illustrated as preferable values in the present embodiment.
Note that since the abovementioned surface roughness varies in numerical value in the case where the material surface is subjected to etching or polishing, this method is preferably used together with the discrimination method A and, further, the discrimination method B or C.
Note that the above-described embodiment and each Example can be modified variously within such ranges as not to depart from the gist of the present invention.
In addition, while the electrolytic iron foils in the abovementioned embodiment and Examples have been described to be mainly used for battery current collectors, this is non-limitative, and, for example, it can be applied to other uses such as heat radiators and electromagnetic wave shields.

[Industrial Applicability]

As has been described above, the electrolytic iron foil, the battery current collector, and the battery of the present invention are applicable to a wide field of industries such as automobiles and electronic apparatuses.

[Reference Signs List]

10: Electrolytic iron foil
10a: First surface
10b: Second surface

**Claims**

1.  An electrolytic iron foil wherein

    the electrolytic iron foil is less than 20 um in thickness,
    the electrolytic iron foil has a first surface and a second surface, and
    a value obtained by dividing a three-dimensional surface texture parameter Sv by the thickness is equal to or less than 0.27 in both the first surface and the second surface.

2.  The electrolytic iron foil according to claim 1, wherein the value obtained by dividing the three-dimensional surface texture parameter Sv by the thickness is equal to or less than 0.24 in at least either one of the first surface and the second surface.

3.  The electrolytic iron foil according to claim 1 or 2, wherein a three-dimensional surface texture parameter Sdq (root mean square gradient) is equal to or more than 0.06 in at least either one of the first surface and the second surface.

4.  The electrolytic iron foil according to any one of claims 1 to 3, wherein iron content of the foil is equal to or more than 80 wt%.

5.  The electrolytic iron foil according to any one of claims 1 to 4, wherein elongation is equal to or more than 1.2%.

6.  The electrolytic iron foil according to any one of claims 1 to 5, wherein a three-dimensional surface texture parameter Sdr is equal to or more than 0.2% in at least either one of the first surface and the second surface.

7.  An electrolytic iron foil for a battery current collector, comprising:
    the electrolytic iron foil according to any one of claims 1 to 6.

8.  An electrolytic iron foil for a nonaqueous battery current collector, comprising:
    the electrolytic iron foil according to any one of claims 1 to 7.

[Fig.1]

(a)

10a

10

10b

(b)

10a

t

10b

[Fig.2]

JIS K6251-4

## INTERNATIONAL SEARCH REPORT

| International application No. |
| --- |
| PCT/JP2021/026579 |

**A. CLASSIFICATION OF SUBJECT MATTER**
Int. Cl. C25D1/04(2006.01)i, H01M4/66(2006.01)i
FI: C25D1/04 331, H01M4/66 A

According to International Patent Classification (IPC) or to both national classification and IPC

**B. FIELDS SEARCHED**

Minimum documentation searched (classification system followed by classification symbols)
Int. Cl. C25D1/04, H01M4/66

Documentation searched other than minimum documentation to the extent that such documents are included in the fields searched
Published examined utility model applications of Japan      1922-1996
Published unexamined utility model applications of Japan    1971-2021
Registered utility model specifications of Japan            1996-2021
Published registered utility model applications of Japan    1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2015-504599 A (KOREA INSTITUTE OF INDUSTRIAL TECHNOLOGY) 12 February 2015 (2015-02-12), entire text | 1-8 |
| A | JP 2010-518252 A (HYDRO QUEBEC) 27 May 2010 (2010-05-27), entire text | 1-8 |
| A | JP 8-60392 A (SUMITOMO METAL MINING CO., LTD.) 05 March 1996 (1996-03-05), entire text | 1-8 |
| A | JP 1-104792 A (NISSHIN STEEL CO., LTD.) 21 April 1989 (1989-04-21), entire text | 1-8 |

☐ Further documents are listed in the continuation of Box C.      ☒ See patent family annex.

| | |
| --- | --- |
| * Special categories of cited documents:<br>"A" document defining the general state of the art which is not considered to be of particular relevance<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search<br>03.08.2021 | Date of mailing of the international search report<br>10.08.2021 |
| --- | --- |
| Name and mailing address of the ISA/<br>    Japan Patent Office<br>    3-4-3, Kasumigaseki, Chiyoda-ku,<br>    Tokyo 100-8915, Japan | Authorized officer<br><br><br>Telephone No. |

Form PCT/ISA/210 (second sheet) (January 2015)

International application No.

PCT/JP2021/026579

| Patent Documents referred to in the Report | Publication Date | Patent Family | Publication Date |
|---|---|---|---|
| JP 2015-504599 A | 12.02.2015 | US 2014/0332069 A1<br>entire document<br>WO 2013/073778 A1<br>KR 10-2013-0054909 A | |
| JP 2010-518252 A | 27.05.2010 | US 2010/0071811 A1<br>entire document<br>WO 2008/092265 A1<br>EP 2142678 A1<br>CA 2576752 A1<br>CA 2675987 A1<br>CN 101600813 A<br>KR 10-2009-0129995 A | |
| JP 8-60392 A | 05.03.1996 | (Family: none) | |
| JP 1-104792 A | 21.04.1989 | (Family: none) | |

Form PCT/ISA/210 (patent family annex) (January 2015)

## REFERENCES CITED IN THE DESCRIPTION

**Patent documents cited in the description**

- JP 2017014608 A

- WO 2020017655 A